# EUROPÄISCHE PATENTSCHRIFT

(11) **EP 2 488 776 B1**
(45) Veröffentlichungstag und Bekanntmachung des Hinweises auf die Patenterteilung: **27.04.2016**
(21) Anmeldenummer: 10768462.3
(22) Anmeldetag: 12.10.2010
(51) Int. Cl.: F16K 17/04, F16K 17/06

(54) **DRUCKHALTEVENTIL**
PRESSURE RETAINING VALVE
SOUPAPE DE MAINTIEN DE PRESSION

(30) Priorität: 16.10.2009 DE 102009045773
(43) Veröffentlichungstag der Anmeldung: 22.08.2012
(73) Patentinhaber: ProMinent GmbH, 69123 Heidelberg (DE)
(72) Erfinder: RULL, Jana, 78112 St. Georgen im Schwarzwald (DE); BUBB, Alexander, 68723 Plankstadt (DE); FREISSLER, Bernd, 69234 Dielheim (DE)
(74) Vertreter: WSL Patentanwälte Partnerschaft mbB
(86) Internationale Anmeldenummer: PCT/EP2010/065283
(87) Internationale Veröffentlichungsnummer: WO 2011/045318

(56) Entgegenhaltungen:
- WO-A1-90/08279
- JP-A- 2001 289 342
- US-A1- 2008 251 146

## Beschreibung

Die vorliegende Erfindung betrifft ein Druckhalteventil mit einem Gehäuse, das einen Eintrittskanal und einen Austrittskanal aufweist, wobei der Eintrittskanal und der Austrittskanal miteinander verbindbar sind, einer Trennmembran, die das Gehäuse in zwei Abschnitte unterteilt, einen ersten im Betrieb des Ventils fluidfördernden Abschnitt und einen zweiten im Betrieb des Ventils fluidfreien Abschnitt, einen im fluidfördernden Abschnitt des Gehäuses angeordneten Ventilsitz mit einer Dichtfläche, wobei der Ventilsitz ein Ende des Eintrittskanals definiert, einem bewegbar in dem fluidfördernden Abschnitt des Gehäuses angeordneten Absperrkörper mit einer Dichtfläche und einem Federelement mit einer Federkraft, das in dem fluidfreien Abschnitt des Druckhalteventils angeordnet ist, wobei das Federelement so angeordnet ist, dass seine Federkraft die Dichtfläche des Absperrkörpers in Richtung auf die Dichtfläche des Ventilsitzes hin vorspannt, so dass in einer das Ventil verschließenden Position des Absperrkörpers die Dichtflächen miteinander in Eingriff sind und der Absperrkörper den Eintrittskanal von dem Austrittskanal trennt, und wobei der Eintrittskanal so angeordnet ist, dass ein im Betrieb des Ventils durch den Eintrittskanal einströmendes Fluid so an dem Absperrkörper ansteht, dass das Fluid eine Kraft auf dem Absperrkörper ausübt, die der Federkraft des Federelements entgegenwirkt.

Druckhalteventile werden im Allgemeinen dafür verwendet, im Auslassbereich von Pumpen, insbesondere Dosierpumpen, den notwendigen Gegendruck für den sicheren Betrieb der Pumpe zu erhalten. Dabei ist das Gegendruckventil in der Regel kein Bestandteil der Pumpe, sondern befindet sich an irgendeiner geeigneten Stelle in Förderrichtung des zu fördernden Fluids hinter der Pumpe in der Anlage.

Aus der JP 2001-289342 ist ein Ventil bekannt, dessen Absperrkörper sich durch den Eintrittskanal hindurch in eine Führungsbuchse außerhalb des Eintrittskanals erstreckt.

Aus der EP 0 759 132 B1 ist ein Druckhalteventil der eingangs genannten Art bekannt, das zwischen der Trennmembran und dem Ventilsitz eine den Ventilschaft verschiebbar führende Führungsscheibe aufweist, wobei die Führungsscheibe den Ventilschaft unter Bildung eines engen, als Drosselstelle wirkenden Ringspalts umgibt. Die Drosselstelle soll verhindern, dass im fluidfördernden Abschnitt des Gehäuses des Druckhalteventils unter Druck anstehendes Fluid auf die Trennmembran einwirkt und durch diese eine Kraft auf das Federelement entgegen dessen Federkraft ausübt, so dass die Schließkraft des Absperrkörpers verringert wird.

Der enge Ringspalt zwischen Ventilschaft und Führungsscheibe im Stand der Technik, der nicht oder nur von ganz geringen Fluidmengen durchflossen ist, tendiert zur Verschmutzung, wodurch die Funktionsfähigkeit des Ventils zu beeinträchtigt werden kann.

Demgegenüber liegt der vorliegenden Erfindung die Aufgabe zugrunde, ein Druckhalteventil bereitzustellen, das dieses Problem vermeidet.

Die Aufgabe wird durch ein Druckhalteventil gelöst mit einem Gehäuse, das einen Eintrittskanal und einen Austrittskanal aufweist, wobei der Eintrittskanal und der Austrittskanal miteinander verbindbar sind, einer Trennmembran, die das Gehäuse in zwei Abschnitte unterteilt, einen ersten im Betrieb des Ventils fluidfördernden Abschnitt und einen zweiten im Betrieb des Ventils fluidfreien Abschnitt, einem im fluidfördernden Abschnitt des Gehäuses angeordneten Ventilsitz mit einer Dichtfläche, wobei der Ventilsitz ein Ende des Eintrittskanals definiert, einem bewegbar in dem fluidfördernden Abschnitt des Gehäuses angeordneten Absperrkörper mit einer Dichtfläche und einem Federelement mit einer Federkraft, das in dem fluidfreien Abschnitt des Druckhalteventils angeordnet ist, wobei das Federelement so angeordnet ist, dass seine Federkraft die Dichtfläche des Absperrkörpers in Richtung auf die Dichtfläche des Ventilsitzes hin vorspannt, so dass in einer das Ventil verschließenden Position des Absperrkörpers die Dichtflächen miteinander in Eingriff sind und der Absperrkörper den Eintrittskanal von dem Austrittskanal trennt, wobei der Eintrittskanal so angeordnet ist, dass im Betrieb des Ventils ein durch den Eintrittskanal einströmendes Fluid so an dem Absperrkörper ansteht, dass das Fluid eine Kraft auf den Absperrkörper ausübt, die der Federkraft des Federelements entgegenwirkt, wobei der Absperrkörper einen Führungsabschnitt aufweist, der sich in den Eintrittskanal hinein erstreckt und wobei der Eintrittskanal abschnittsweise so ausgestaltet ist, dass er eine Führungsbuchse bildet, in dem der Führungsabschnitt des Absperrkörpers geführt aufgenommen ist, wobei die Führungsbuchse eine im Wesentlichen hohlzylindrische Form mit einer Zylinderinnenwand, die das Volumen des Eintrittskanals begrenzt und die die Führung für den Führungsabschnitt bereitstellt, aufweist und wobei die Trennmembran eine Wirkfläche A1 aufweist, an der ein im Gehäuse befindliches Fluid derart ansteht, dass es eine Kraft entgegen der Federkraft des Federelements ausübt, und der Absperrkörper eine Wirkfläche A2 aufweist, an der das im Gehäuse befindliche Fluid derart ansteht, dass es eine Kraft in Richtung der Federkraft des Federelements auf den Absperrkörper ausübt, wobei die Flächen A1 und A2 so gewählt sind, dass sich die an ihnen anstehenden Kräfte im Wesentlichen kompensieren.

Erfindungsgemäß ist die Führung des Absperrkörpers bzw. Ventilkolbens gegenüber dem Stand der Technik aus dem Bereich zwischen dem Ventilsitz des Gehäuses und der Trennmembran in den Bereich des Eintrittskanals, in Förderrichtung des Fluids vor dem Ventilsitz, verlagert worden. Auf diese Weise wird die Führung des Absperrkörpers im Betrieb des Ventils in regelmäßigen Abständen von dem zu fördernden Fluid vollständig durchspült und die Ablagerung von Verunreinigungen in einem Spalt zwischen dem Führungsabschnitt des Absperrkörpers und der Führungsbuchse wird verhindert, so dass die Zuverlässigkeit des Ventils steigt.

Die Trennung des Gehäuses mit Hilfe der Trennmembran dient wie im Stand der Technik dazu, das Gehäuse in einen im Betrieb des Ventils fluidfördernden Abschnitt und einen im Betrieb des Ventils fluidfreien Abschnitt zu unterteilen. Durch Anordnung des Federelements in dem fluidfreien Abschnitt des Gehäuses wird dieses nicht von den zu fördernden Fluiden angegriffen, was die Lebensdauer des Ventils erheblich verbessert.

Das erfindungsgemäße Ventil wird von der auf den Absperrkörper einwirkenden Federkraft geschlossen und von den durch das im Eintrittskanal an dem Absperrkörper anstehenden Fluid ausgeübten Kräften, die der Federkraft des Federelements entgegengerichtet sind, geöffnet.

Die Führungsbuchse weist eine im Wesentlichen hohlzylindrische Form mit einer Zylinderinnenwand auf, die sowohl den Eintrittskanal definiert als auch die Führungsbuchse bildet. In einer solchen hohlzylindrischen Führungsbuchse lassen sich ganz unterschiedliche Formen von Führungsabschnitten aufnehmen.

Entscheidend für den Führungsabschnitt des Absperrkörpers ist es in einer Ausführungsform, dass dieser mindestens einen Kanal aufweist, der sich im Wesentlichen parallel zum Eintrittskanal des Gehäuses erstreckt und durch den im Betrieb des Ventils das zu fördernde Fluid strömt. Auf diese Weise wird verhindert, dass der sich in den Eintrittskanal erstreckende Führungsabschnitt des Absperrkörpers den Eintrittskanal verstopft oder den Querschnitt, durch den Fluid gefördert werden kann, so weit einengt, dass eine effektive Fluidförderung nicht mehr möglich ist.

Darüber hinaus ist es in einer Ausführungsform zweckmäßig, wenn der Führungsabschnitt mindestens einen Kanal aufweist, der einen Fluidfluss in eine Richtung senkrecht zum Eintrittskanal ermöglicht, so dass durch den Eintrittskanal strömendes Fluid bei geöffnetem Ventil zwischen den Dichtflächen des Ventilsitzes und des Absperrkörpers durchströmen kann.

In einer Ausführungsform der Erfindung weist der Führungsabschnitt eine Mehrzahl von sich im Wesentlichen in radialer Richtung erstreckenden und in Umfangsrichtung voneinander beabstandeten Führungsflügeln auf, so dass im geöffneten Zustand des Ventils Fluid aus dem Eintrittskanal durch den Führungsabschnitt des Absperrkörpers und durch einen Zwischenraum zwischen den ersten und zweiten Dichtflächen in den Austrittskanal strömen kann.

In einer solchen Ausführungsform ist zwischen den lamellenartigen Führungsflügeln sowohl eine Strömung des Fluids in einer Richtung parallel zum Eintrittskanal und damit auf den Absperrkörper hin möglich, als auch in einer Richtung senkrecht zur Richtung des Eintrittskanals, so dass das Fluid im geöffneten Zustand des Ventils zwischen den beiden Dichtflächen des Absperrkörpers und des Ventilsitzes hindurchströmen kann.

Ist in einer solchen Ausführungsform der Erfindung die Führungsbuchse, welche vom Eintrittskanal gebildet wird, hohlzylindrisch ausgebildet, so ist es zweckmäßig, wenn die außenliegenden Stirnflächen der Führungsflügel alle auf der Kontur eines Kreises liegen, der einen geringfügig kleineren Radius aufweist als der Radius der Innenwand des Hohlzylinders der Führungsbuchse.

In einer Ausführungsform der Erfindung weist der Führungsabschnitt des Absperrkörpers eine hohlzylindrischen Abschnitt auf, der an seinem ventilsitzseitigen Ende mindestens eine Durchbrechung aufweist, so dass im geöffneten Zustand des Ventils Fluid aus dem Eintrittskanal durch den hohlzylindrischen Abschnitt des Absperrkörpers, durch die Durchbrechung in dem hohlzylindrischen Abschnitt und weiter zwischen den Dichtflächen in den Austrittskanal strömen kann.

In einer Ausführungsform, in welcher die Führungsbuchse einen Hohlzylinder mit einem Innendurchmesser bildet und der Führungsabschnitt des Absperrkörpers ebenfalls eine zylindrische Außenkontur mit einem Außendurchmesser aufweist, ist es vorteilhaft, wenn sich der Innendurchmesser und der Außendurchmesser um 0,5 mm bis 2 mm und vorzugsweise von 0,8 mm bis 1,5 mm voneinander unterscheiden. Auf diese Weise wird ein Ringspalt zwischen der Führungsbuchse und dem Führungsabschnitt ausgebildet, der eine verkantungsfreie Führung des Führungsabschnitts in der Führungsbuchse ermöglicht.

In einer Ausführungsform der Erfindung weist der sich in den Eintrittskanal erstreckende Führungsabschnitt des Absperrkörpers eine Gesamtlänge auf, die so bemessen ist, dass sich der Führungsabschnitt, wenn der Absperrkörper in einer das Ventil vollständig öffnenden Position ist, noch mindestens über eine Länge in der Führungsbuchse befindet, die mindestens die Hälfte und vorzugsweise mindestens zwei Drittel der Gesamtlänge des Führungsabschnitts beträgt.

Auf diese Weise wird auch noch im geöffneten Zustand des Ventils, d.h. dann, wenn der Führungsabschnitt des Absperrkörpers ein Stück aus der Führungsbuchse herausgezogen ist, um die Dichtflächen des Absperrkörpers und des Ventilsitzes voneinander zu entfernen, eine ausreichende Führung des Absperrkörpers gewährleistet.

Die Trennmembran weist eine Wirkfläche A1 auf, an der ein im Gehäuse befindliches Fluid derart ansteht, dass es eine Kraft entgegen der Federkraft des Federelements ausübt und der Absperrkörper weist eine Wirkfläche A2 auf, an der das im Gehäuse befindliche Fluid derart ansteht, dass es eine Kraft in Richtung der Federkraft des Federelements auf den Absperrkörper ausübt, wobei die Flächen A1 und A2 so gewählt sind, dass sich die an ihnen anstehenden Kräfte in einer Richtung parallel zur Federkraft des Federelements und in einer Richtung entgegen der Federkraft des Federelements im Wesentlichen kompensieren.

Eine derartige Ausgestaltung der Flächen A1 und A2 führt zu einer hydrostatischen Kompensation der Ventilanordnung, so dass sich die aufgrund des Drucks des im Austrittskanal befindlichen Fluids in und entgegen der Richtung der Federkraft auf das Ventil bzw. den Absperrkörper einwirkenden Kräfte gerade aufheben. So wird gewährleistet, dass die zum Öffnen des Ventils erforderliche Kraft bzw. der Druck des im Eintrittskanal anstehenden Fluids im Wesentlichen ausschließlich durch die Federkraft des Federelements bestimmt wird. Das Ventil ist damit nahezu rückdruckwirkungsfrei.

In einer Ausführungsform der Erfindung wird die Dichtfläche des Absperrkörpers von mindestens einem in Umfangsrichtung verlaufenden Dichtwulst gebildet. Eine solche Ausgestaltung ermöglicht es, den Absperrkörper einstückig auszugestalten. Der Dichtwulst verfügt über eine ausreichende Flexibilität, um eine effektive Abdichtung zwischen der Dichtfläche des Absperrkörpers und der Dichtfläche des Ventilsitzes bereitzustellen.

Dabei ist es insbesondere Vorteilhaft, wenn der Absperrkörper aus einem weicheren Kunststoffmaterial hergestellt ist als der Ventilsitz.

Weitere Vorteile, Merkmale und Anwendungsmöglichkeiten der vorliegenden Erfindung werden anhand der folgenden Beschreibung einer Ausführungsform und der dazugehörigen Figuren deutlich.
Figur 1 zeigt eine Schnittansicht durch eine Ausführungsform des erfindungsgemäßen Druckhalteventils.
Figur 2 zeigt eine teilweise Schnittansicht durch den Absperrkörper des Druckhalteventils aus Figur 1.
Figur 3 zeigt eine dreidimensionale Ansicht des Absperrkörpers aus Figur 2.
Figur 4 zeigt eine Schnittansicht durch eine alternative Ausführungsform eines erfindungsgemäßen Absperrkörpers.
Figur 5 zeigt eine dreidimensionale Ansicht des Absperrkörpers aus Figur 4.
Figuren 6a) und b) zeigen Schnittansichten durch eine alternative Ausführungsform eines erfindungsgemäßen Absperrkörpers.
Figur 7 zeigt eine Schnittansicht durch eine alternative Ausführungsform eines Druckhalteventils mit einem Absperrkörper gemäß Figuren 6 a) und b) mit einer Membranbruchsignalisierung.

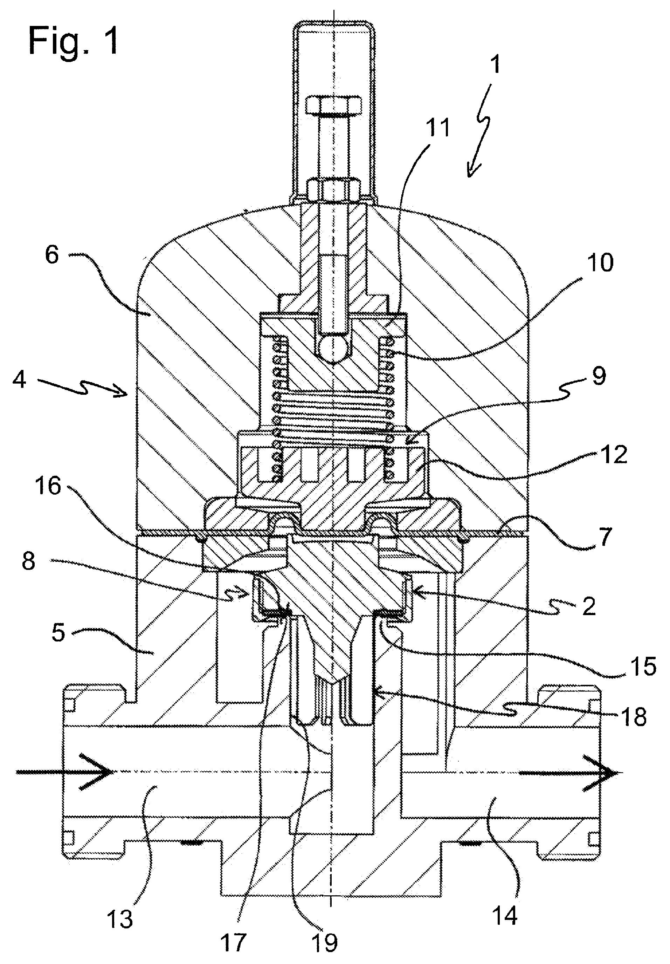

Figur 1 zeigt ein erfindungsgemäßes Druckhalteventil 1 mit einer ersten Ausführungsform des dazugehörigen Absperrkörpers bzw. Ventilkolbens 2. Das Druckhalteventil 1 weist ferner ein Gehäuse 4 mit einem Gehäuseunterteil 5 und einem Gehäuseoberteil 6 auf. Dabei sind das Gehäuseoberteil 6 und das Gehäuseunterteil 5 so miteinander verbunden, dass zwischen ihnen eine Trennmembran 7 eingeklemmt ist, die das Gehäuse 4 in einen fluidfördernden Abschnitt 8 und einen fluidfreien Abschnitt 9 unterteilt.

Im fluidfreien Abschnitt 9 ist ohne die Einflüsse des möglicherweise aggressiven zu fordernden Fluids eine Spiralfeder 10 als Federelement angeordnet. Die Spiralfeder 10 ist gehäuseseitig gegen ein einstellbares Widerlager 11 abgestützt und drückt an ihrem freien Ende auf einen bewegbar im Gehäuseoberteil 6 geführten Stempel 12. Der Stempel 12 wiederum überträgt die Federkraft der Feder 10 über die Trennmembran 7 auf den Ventilkolben 2.

Im fluidfördernden Abschnitt 8 des Gehäuses 4 sind ein Eintrittskanal 13 und ein Austrittskanal 14 angeordnet, durch die das zu fördernde Fluid strömt. Ein gehäuseseitiger Ventilsitz 15 mit einer Dichtfläche 16 definiert den Übergang zwischen Eintrittskanal 13 und Austrittskanal 14, d.h. das Ende des Eintrittskanals 13 und den Anfang des Austrittskanals 14.

Die Federkraft der Feder 10 drückt den Ventilkolben 2 über den Stempel 12 und die Trennmembran 7 mit seiner Dichtfläche 17 auf den Ventilsitz 15 des Gehäuses 4. Übersteigt die von dem am Ventilkolben im Eintrittskanal 13 anstehenden Fluid ausgeübte Kraft die Federkraft der Feder 10, so wird das Ventil geöffnet.

Der in Figur 1 dargestellte Ventilkolben 2 weist oberhalb des Ventilsitzes 15, d.h. im Austrittskanal 14 des Ventils 1 keine Führung auf sondern verfügt über einen Führungsabschnitt 18, der sich in den Eintrittskanal 13 hineinerstreckt. Der Eintrittskanal 13 ist in diesem Bereich als Führungsbuchse 19 ausgestaltet, in welcher der Führungsabschnitt 18 bewegbar geführt ist.

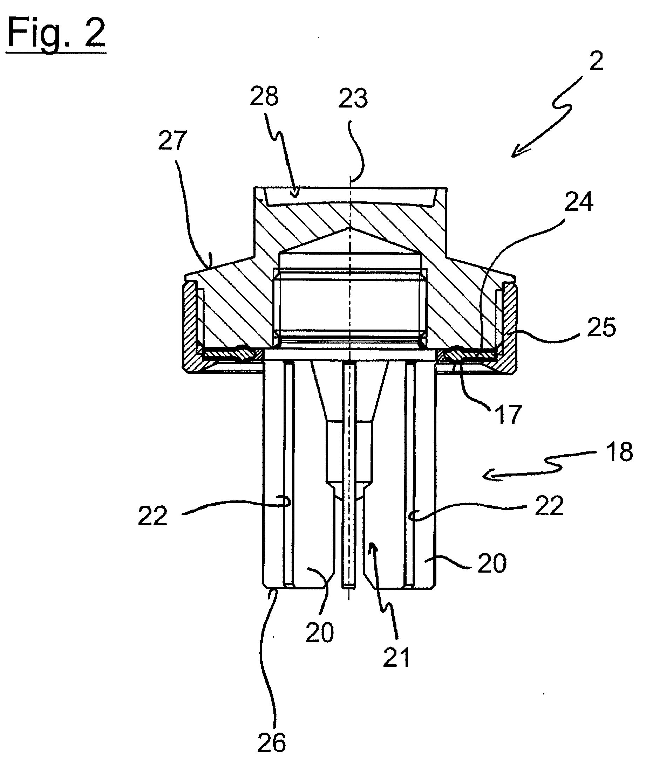

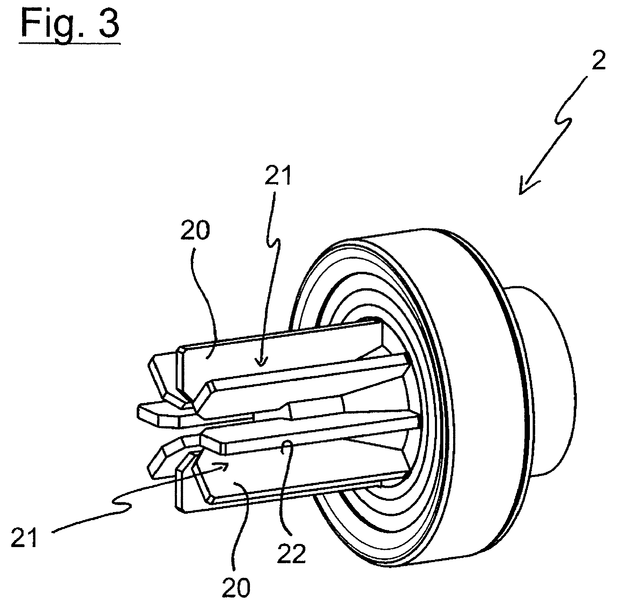

Die Details des Ventilkolbens 2 sind deutlicher in den Figuren 2 und 3, einer Schnittansicht bzw. einer dreidimensionalen Ansicht des Kolbens, dargestellt. Der Führungsabschnitt 18 besteht in der dargestellten Ausführungsform aus acht Führungsflügeln 20, die eine im Wesentlichen radiale Erstreckung aufweisen. Geht man von einer zylindrischen Grundform des Ventilkolbens 2 aus, so erstrecken sich die Führungsflügel 20 entlang des Radius des Zylinders und sind in Umfangsrichtung voneinander beabstandet. Auf diese Weise werden zwischen den Führungsflügeln 20 Durchlasskanäle 21 ausgebildet, durch die das in dem Eintrittskanal 13 geförderte Fluid im Wesentlichen parallel zur Zylinderachse der Führungsbuchse 19 strömt.

Die äußeren Stirnflächen 22 der Führungsflügel 20 liegen auf einem Kreis mit konstantem Radius um die Zylinderachse 23 des Kolbens herum. Dabei ist der Radius, auf welchem die äußeren Stirnflächen 22 der Führungsflügel 20 liegen, etwas kleiner als der Innenradius der Führungsbuchse 19. Auf diese Weise wird eine stabile seitliche Führung des Ventilkolbens 2 in der Führungsbuchse 19 des Eintrittskanals 13 gewährleistet. Durch eine im Betrieb regelmäßig erfolgende Durchströmung des Bereichs der Führungsbuchse 19 können sich in dem Spalt zwischen den Stirnflächen 22 der Führungsflügel 20 und der Buchse 19 keine Verschmutzungen ablagern.

Die Führungsflügel 20 erstrecken sich bis zur Dichtfläche 17 des Ventilkolbens 2, so dass bei geöffnetem Ventil, d.h. dann, wenn der Ventilkolben 2 ein Stück aus der Buchse 19 herausgezogen ist, das zu fördernde Fluid durch die Strömungskanäle 21 zwischen die Dichtflächen 16, 17 des Ventilsitzes 15 bzw. des Ventilkolbens 2 strömen kann und damit den Austrittskanal 14 des Ventils 1 erreicht.

In der dargestellten Ausführungsform sind das Gehäuse 4 und der Ventilkolben aus Polyvinylidenfluorid (PVDF) gefertigt, welches eine außerordentlich gute chemische Beständigkeit aufweist. Um eine gute und verschleißarme Dichtung der beiden aneinanderstoßenden Dichtflächen 16, 17 des Kolbens 2 bzw. des Ventilsitzes 15 zu gewährleisten, wird die Dichtfläche 17 des Ventilkolbens 2 von einem Dichtring 24 gebildet. Der Dichtring 24 besteht aus einem elastischen Kern aus einem Fluorelastomer, hier Viton, sowie einem chemisch beständigen Mantel aus PTFE. Der Dichtring 24 ist mit Hilfe einer Überwurfmutter 25 auf den Körper des Ventilkolbens 2 aufgeschraubt.

Im Betrieb des Ventils 1 steht im Austrittskanal 14 in der Regel ein Fluid unter Druck an. Die mit dem Druck des Fluids verbundenen Kräfte wirken auf alle Flächen des Austrittskanals, d.h. auch auf die Oberflächen des Ventilkolbens 2 und die Oberfläche der Trennmembran 7. Die an der Trennmembran 7 angreifenden Kräfte des Fluids wirken im Wesentlichen entgegen der Federkraft der Spiralfeder 10 und verringern deren effektive Federkraft. Hingegen wirken die an denjenigen Flächen 27 des Ventilkolbens 2, die im Wesentlichen senkrecht zur Symmetrieachse 23 des Ventilkolbens stehen oder Komponenten in dieser Richtung aufweisen, angreifende Kräfte in der Richtung der Federkraft des Federelements 10. Daher sind in der dargestellten Ausführungsform die entsprechenden Flächen 27 des Ventilkolbens 2 und die mit Fluid beaufschlagten Flächen der Trennmembran 7 so gewählt, dass sich die an ihnen in Richtungen parallel zur Symmetrieachse 23 angreifenden Kräfte gerade kompensieren. Das Druckhalteventil 1 ist daher nahezu rückdruckwirkungsfrei oder hydrostatisch kompensiert. Die Kraft, mit der der Ventilkolben 2 gegen den Ventilsitz 5 gepresst wird, hängt im Wesentlichen nur von der einstellbaren Federkraft der Spiralfeder 10 ab.

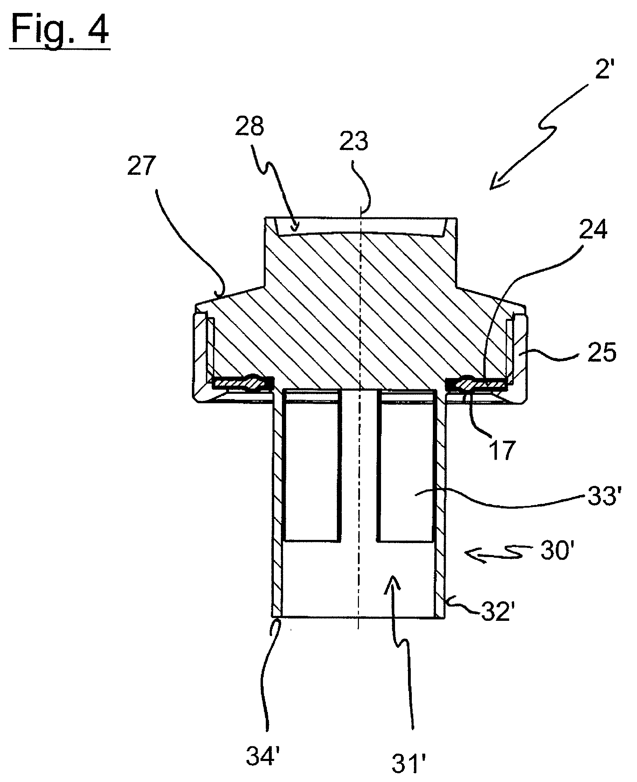

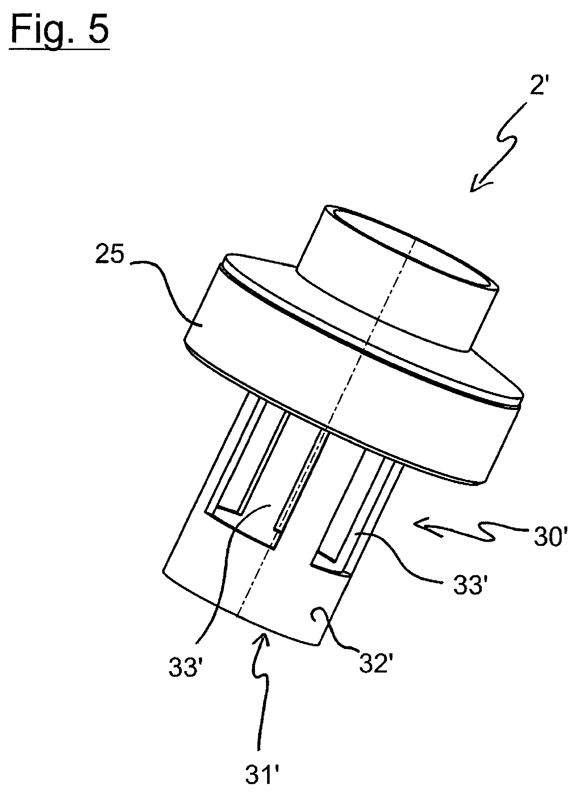

Die Figuren 4 und 5 zeigen eine alternative Ausführungsform des Ventilkolbens 2'. Dieser könnte ohne weitere Veränderung den Ventilkolben 2 des Druckhalteventils 1 aus Figur 1 ersezten. Statt der Führungsflügel 20 weist der Ventilkolben 2' aus Figuren 4 und 5 einen hohlzylindrischen Abschnitt 30' als Führungsabschnitt auf. Durch den freien Innenraum 31' des Führungsabschnitts 30' kann das Fluid strömen. Der Außenradius des Führungsabschnitts 30' ist wie zuvor so bemessen, dass zwischen der Außenwand 32' des Führungsabschnitts 30' und der Führungsbuchse 19 ein kleiner Ringspalt gebildet wird.

Der Führungshohlzylinder 30' weist an seinem oberen, dichtflächenseitigen Ende vier Durchbrechungen 33' auf, durch die das Fluid zwischen die Dichtflächen 16, 17 strömt und damit in den Austrittskanal 14 gelangt. Die übrigen Elemente des Ventilkolbens 2' sind analog zu der ersten Ausführungsform des Ventilkolbens 2 aus den Figuren 1 bis 3 ausgestaltet und weisen daher in den Figuren 4 und 5 die gleichen Bezugszeichen auf wie in den Figuren 1 bis 3.

Beide Ausführungsformen der Ventilkolben 2, 2' weisen eine Gesamtlänge des Führungsabschnitts 18 bzw. 30' gemessen von der Dichtfläche 17 bis zur Unterkante 26 bzw. 34' auf, die gerade so lang ist, dass bei vollständig geöffnetem Ventil nur maximal 50 % der Gesamtlänge des Führungsabschnitts 18 bzw. 30' aus der Führungsbuchse 19 des Gehäuses 4 herausgezogen sind. Auf diese Art wird ein Verkanten der Ventilkolben 2, 2' vermieden und ein störungsfreier Betrieb des Ventils 1 gewährleistet.

Am oberen Ende des Ventilkolbens, 2' ist in beiden Ausführungsformen der Figuren 1 bis 3 bzw. 4, 5 eine Vertiefung 28 als Aufnahme für den Stempel 12 vorgesehen. Der Stempel 12 steht über die Trennmembran 7 mit dieser Aufnahme des Kolbens 2, 2' in Eingriff. In alternativen Ausführungsformen kann aber der Stempel mit dem Kolben verschraubt oder anderweitig mechanisch verbunden sein.

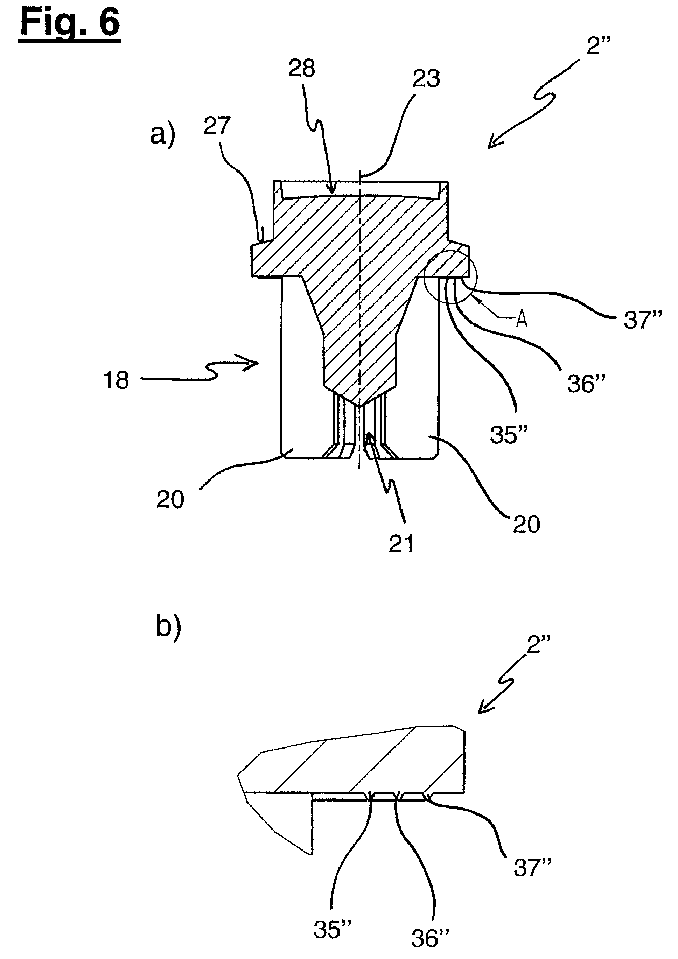

Figuren 6 a) und b) zeigen Schnittansichten durch eine alternative Ausführungsform eines erfindungsgemäßen Absperrkörpers bzw. Ventilkolbens 2". Der in den Figuren 6 a) und b) gezeigte Ventilkolben entspricht in seinem grundsätzlichen Aufbau weitgehend dem Ventilkolben 2, so wie er in den Figuren 1 bis 3 dargestellt ist. Der Ventilkolben 2 aus Figur 1 könnte ohne Einschränkung durch den Ventilkolben 2" aus den Figuren 6 a) und b) ersetzt werden. Figur 6 b) zeigt eine vergrößerte Abbildung des Ausschnitts A aus Figur 6 a). Gegenüber dem Ventilkolben 2 aus den Figuren 1 bis 3 wurde auf eine zweistückige Ausführung von Ventilkolben bzw. Absperrkörper 2 und Dichtring 24 verzichtet. Stattdessen sind in den die Dichtfläche des Ventilkolbens 2" bildenden Rand des Kolbens drei Dichtwülste 35", 36" und 37" eingespritzt. Zudem ist der Ventilkolben 2" aus einem gegenüber dem Gehäuse 4 weicheren PVDF-Material gefertigt. Die drei Dichtwülste 35", 36", 37" treten mit der Dichtfläche 16 des Ventilsitzes 15 des Ventilgehäuses 4 in Eingriff und bewirken eine effektive Abdichtung. Die beschriebene Konstruktion ermöglicht es, auf den Dichtring 24 und die Überwurfmutter 25 zu verzichten und trotzdem eine gute Ventildichtigkeit zu realisieren.

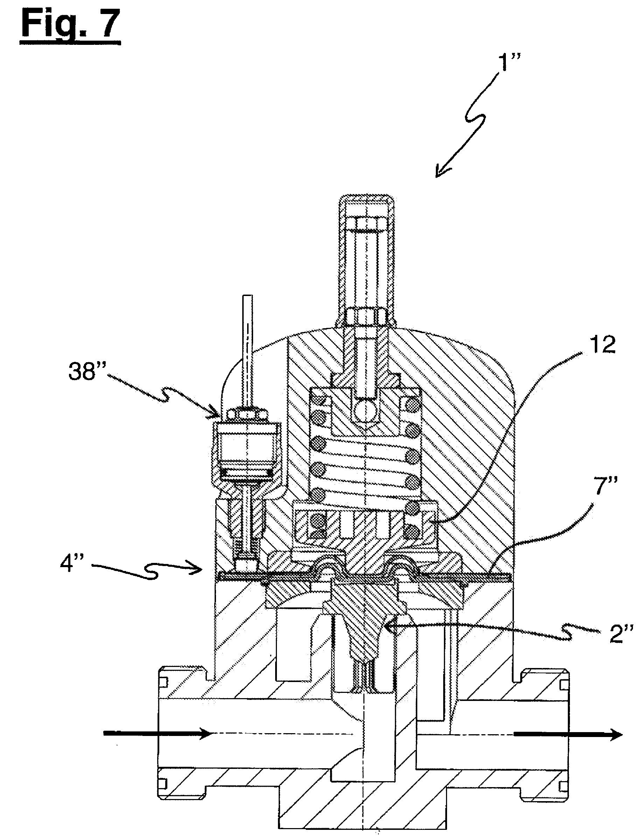

Figur 7 zeigt eine Schnittansicht durch eine Ausführungsform eines erfindungsgemäßen Druckhalteventils 1" mit einer Membranbruchsignalisierung. In dem Druckhalteventil 1" ist ein Absperrkörper eingebaut, so wie er in den Figuren 6 a) und 6 b) gezeigt ist. Das Gehäuse 4" weist einen ähnlichen Aufbau auf wie das Gehäuse 4 des Ventils 1 aus Figur 1. Es verfügt jedoch zusätzlich über einen den Randbereich der Trennmembran 7" erfassenden Bewegungssensor 38". Die Trennmembran 7" verfügt über einen Aufbau, so wie er in dem europäischen Patent EP 1 384 891 B1 für die Membran einer Membranpumpe beschrieben ist.

Die in der Ausführungsform aus Figur 7 verwendete Sicherheitsmembran 7" besteht aus zwei übereinanderliegend angeordneten Membranlagen, wobei diese Membranlagen an allen Kantenbereichen, an denen Flüssigkeit oder Gas zwischen die Membranlagen eindringen könnte, gegen ein Eindringen von Flüssigkeit und/oder Gas dicht miteinander verbunden sind. Die übereinanderliegend angeordneten Membranlagen sind somit wenigstens an ihrer Umfangskante und, soweit vorhanden, den Durchgangsöffnungen im Einspannbereich sowie im Zentrum am Stempel 12 flüssigkeits- und gasdicht miteinander verbunden. Die übrigen einander zugewandten Flächen der übereinanderliegend angeordneten Membranlagen liegen ohne feste Verbindung aufeinander.

Bei einer Verletzung einer der übereinanderliegend angeordneten Membranlagen während des Betriebes dringt durch das Ventil zu fördernde Flüssigkeit in den Zwischenraum zwischen den aufeinanderliegenden Membranlagen ein, wodurch sich der Druck innerhalb dieses Zwischenraums von atmosphärischem bzw. unteratmosphärischem Druck erhöht bis auf den Druck in der Förder- bzw. Hydraulikflüssigkeit. Weil die übereinanderliegend angeordneten Membranlagen nicht vollflächig fest miteinander verbunden sind, kann sich der Druck bzw. eindringende Flüssigkeit zwischen den Membranlagen bis hin zu dem Sensorbereich der Membran ausbreiten. Der Abschnitt des Sensorbereiches der Membran 7", dort wo der Drucksensor 38" mit dieser in Eingriff ist, ist so ausgebildet, dass die Membranlagen in diesem Abschnitt dem erhöhten Druck weniger Widerstand entgegensetzen und sich leichter deformieren als die Membranlagen in den übrigen Abschnitten der Membran. Bei einem Membranbruch und einer damit einhergehenden Druckerhöhung zwischen den Membranlagen wird der Abschnitt des Sensorbereiches unter Vergrößerung des Abstandes zwischen den einander gegenüberliegenden Flächen der Membranlagen auseinandergedrückt. Dies wird von dem Drucksensor 38" erfasst.

### Bezugszeichenliste

- 1, 1": Druckhalteventil
- 2, 2', 2": Ventilkolben
- 4: Gehäuse
- 5: Gehäuseunterteil
- 6: Gehäuseoberteil
- 7, 7": Trennmembran
- 8: Fluidfördernder Abschnitt
- 9: Fluidfreier Abschnitt
- 10: Spiralfeder
- 11: Widerlager
- 12: Stempel
- 13: Eintrittskanal
- 14: Austrittskanal
- 15: Ventilsitz
- 16,17: Dichtfläche
- 18: Führungsabschnitt
- 19: Führungsbuchse
- 20: Führungsflügel
- 21: Durchlasskanal
- 22: Stirnfläche
- 23: Zylinderachse des Ventilkolbens 2
- 24: Dichtring
- 25: Überwurfmutter
- 26: Unterkante des Führungsabschnitts 18
- 27: Oberfläche des Kolbens
- 28: Vertiefung
- 30': hohlzylindrischer Führungsabschnitt
- 31': Innenwand des Führungsabschnitts 30'
- 32': Außenwand
- 33': Durchbrechung
- 34': Unterkante des Führungsabschnitts 30'
- 35", 36", 37": Dichtwülste
- 38": Drucksensor

## Patentansprüche

1. Druckhalteventil (1, 1"') mit
einem Gehäuse (4), das einen Eintrittskanal (13) und einen Austrittskanal (14) aufweist, wobei der Eintrittskanal (13) und der Austrittskanal (14) miteinander verbindbar sind, einer Trennmembran (7), die das Gehäuse (4) in zwei Abschnitte untereilt, einen ersten im Betrieb des Ventils fluidfördernden Abschnitt (8) und einen zweiten fluidfreien Abschnitt (9),
einem im fluidfördernden Abschnitt (8) des Gehäuses angeordneten Ventilsitz (15) mit einer Dichtfläche (16), wobei der Ventilsitz (15) ein Ende des Eintrittskanals (13) definiert, einem bewegbar in dem fluidfördernden Abschnitt (8) des Gehäuses (4) angeordneten Absperrkörper (2, 2') mit einer Dichtfläche (17) und
einem Federelement (10) mit einer Federkraft, das in dem fluidfreien Abschnitt (9) des Druckhalteventils (1) angeordnet ist,
wobei das Federelement (10) so angeordnet ist, dass seine Federkraft die Dichtfläche (17) des Absperrkörpers in Richtung auf die Dichtfläche (16) des Ventilsitzes (15) hin vorspannt, so dass in einer das Druckhalteventil (1) verschließenden Position des Absperrkörpers (2, 2', 2") die Dichtflächen (16, 17) miteinander in Eingriff sind und der Absperrkörper den Eintrittskanal (13) von dem Austrittskanal (14) trennt,
und wobei der Eintrittskanal (13) so angeordnet ist, dass im Betrieb des Ventils (1) ein durch den Eintrittskanal (13) einströmendes Fluid so an dem Absperrkörper (2, 2', 2") ansteht, dass das Fluid eine Kraft auf den Absperrkörper (2, 2') ausübt, die der Federkraft des Federelements (10) entgegenwirkt,
wobei der Absperrkörper (2, 2', 2") einen Führungsabschnitt (18, 30') aufweist, der sich in den Eintrittskanal (13) hinein erstreckt,
wobei der Eintrittskanal (13) abschnittsweise so ausgestaltet ist, dass er eine Führungsbuchse (19) bildet, in der der Führungsabschnitt (18, 30') des Absperrkörpers (2, 2', 2") geführt aufgenommen ist und
wobei die Führungsbuchse (19) eine im Wesentlichen hohlzylindrische Form mit einer Zylinderinnenwand, die das Volumen des Eintrittskanals (13) begrenzt und die Führung für den Führungsabschnitt (18) bereitstellt, aufweist, wobei
die Trennmembran (7) eine Wirkfläche A1 aufweist, an der ein im Gehäuse (4) befindliches Fluid derart ansteht, dass es eine Kraft entgegen der Federkraft des Federelements (10) ausübt, **dadurch gekennzeichnet, dass** der Absperrkörper (2, 2', 2") eine Wirkfläche A2 aufweist, an der das im Gehäuse (4) befindliche Fluid derart ansteht, dass es eine Kraft in Richtung der Federkraft des Federelements (10) auf den Absperrkörper (2, 2', 2") ausübt, wobei die Flächen A1 und A2 so gewählt sind, dass sich die an ihnen anstehenden Kräfte im Wesentlichen kompensieren.

2. Druckhalteventil (1, 1") nach Anspruch 1, **dadurch gekennzeichnet, dass** der Führungsabschnitt (18, 30') mindestens einen Kanal (21) aufweist, der sich im Wesentlichen parallel zum Eintrittskanal (13) des Gehäuses (4) erstreckt und durch den im Betrieb des Ventils das zu fördernde Fluid strömt.

3. Druckhalteventil (1, 1") nach Anspruch 1 oder 2, **dadurch gekennzeichnet, dass** der Führungsabschnitt (18, 30') mindestens einen Kanal (33') aufweist, der sich in einer Richtung senkrecht zur Richtung der Führungsbuchse (19) im Eintrittskanal (13) erstreckt.

4. Druckhalteventil (1, 1") nach einem der Ansprüche 1 bis 3,**dadurch gekennzeichnet, dass** der Führungsabschnitt (18) eine Mehrzahl von sich im Wesentlichen in radialer Richtung erstreckenden und in Umfangsrichtung voneinander beabstandeten Führungsflügeln (20) aufweist, so dass im geöffneten Zustand des Ventils, Fluid aus dem Eintrittskanal (13) durch den Führungsabschnitt (18) des Absperrkörpers und durch einen Zwischenraum zwischen den ersten und zweiten Dichtflächen (16, 17) in den Austrittskanal (14) strömen kann.

5. Druckhalteventil (1, 1") nach einem der Ansprüche 1 bis 4, **dadurch gekennzeichnet, dass** der Führungsabschnitt (30') einen hohlzylindrischen Abschnitt aufweist, der an seinem ventilsitzseitigen Ende mindestens eine Durchbrechung (33') aufweist, so dass im geöffneten Zustand des Ventils Fluid aus dem Eintrittskanal (13) durch den hohlzylindrischen Abschnitt des Absperrkörpers (2'), durch die Durchbrechung (33') in dem hohlzylindrischen Abschnitt und weiter durch einen Zwischenraum zwischen den ersten und zweiten Dichtflächen (16, 17) in den Austrittskanal (14) strömen kann.

6. Druckhalteventil (1, 1") nach einem der Ansprüche 1 bis 5, **dadurch gekennzeichnet, dass** die Führungsbuchse (19) einen Hohlzylinder mit einem Innendurchmesser bildet und der Führungsabschnitt (18, 30') des Absperrkörpers (2, 2', 2") einen Außendurchmesser aufweist, wobei sich der Innendurchmesser und der Außendurchmesser um 0,5 mm bis 2 mm und vorzugsweise von 0,8 mm bis 1,5 mm voneinander unterscheiden.

7. Druckhalteventil (1, 1") nach einem der Ansprüche 1 bis 6, **dadurch gekennzeichnet, dass** der sich in den Eintrittskanal (13) erstreckende Führungsabschnitt (18, 30') des Absperrkörpers (2, 2', 2") eine Gesamtlänge aufweist, die so bemessen ist, dass sich der Führungsabschnitt (18, 30'), wenn der Absperrkörper (2, 2', 2") in einer das Ventil (1, 1") vollständig öffnenden Position ist, noch mindestens über eine Länge in der Führungsbuchse (19) befindet, die mindestens die Hälfte und vorzugsweise zwei Drittel der Gesamtlänge des Führungsabschnitts (18, 30') beträgt.

8. Druckhalteventil (1, 1") nach einem der Ansprüche 1 bis 7, **dadurch gekennzeichnet, dass** die Dichtfläche des Absperrkörpers (2") von mindestens einem in Umfangsrichtung verlaufenden Dichtwulst (35", 36", 37") gebildet wird.

9. Druckhalteventil (1, 1") nach Anspruch 8, **dadurch gekennzeichnet, dass** der Absperrkörper (2") aus einem weicheren Kunststoffmaterial hergestellt ist als der Ventilsitz (15).

## Claims

1. A pressure retention valve (1, 1"') comprising
a housing (4) having an inlet passage (13) and an outlet passage (14), wherein the inlet passage (13) and the outlet passage (14) can be connected together,
a separating diaphragm (7) subdividing the housing (4) into two portions, a first portion (8) conveying fluid in operation of the valve and a second fluid-free portion (9),
a valve seat (15) which is arranged into the fluid-conveying portion (8) of the housing and has a sealing surface (16), wherein the valve seat (15) defines an end of the inlet passage (13),
a shut-off body (2, 2') which is arranged movably in the fluid-conveying portion (8) of the housing (4) and has a sealing surface (17), and
a spring element (10) having a spring force, which is arranged in the fluid-free portion (9) of the pressure retention valve (1),
wherein the spring element (10) is so arranged that its spring force prestresses the sealing surface (17) of the shut-off body in the direction towards the sealing surface (16) of the valve seat (15) so that in a position of the shut-off body (2, 2', 2") that closes the pressure retention valve (1) the sealing surfaces (16, 17) are in engagement with each other and the shut-off body separates the inlet passage (13) from the outlet passage (14),
and wherein the inlet passage (13) is so arranged that in operation of the valve (1) a fluid flowing in through the inlet passage (13) is applied to the shut-off body (2, 2', 2") in such a way that the fluid exerts on the shut-off body (2, 2') a force which acts in opposition to the spring force of the spring element (10),
wherein the shut-off body (2, 2', 2") has a guide portion (18, 30') which extends into the inlet passage (13),
wherein the inlet passage (13) is portion-wise of such a design configuration that it forms a guide bush (19) in which the guide portion (18, 30') of the shut-off body (2, 2', 2") is guidedly received, and
wherein the guide bush (19) is of a substantially hollow-cylindrical shape with a cylindrical inside wall which delimits the volume of the inlet passage (13) and provides the guidance for the guide portion (18), wherein the separating diaphragm (7) has an operative surface A1 to which a fluid in the housing (4) is applied in such a way that it exerts a force in opposite relationship to the spring force of the spring element (10),
**characterized in that**
the shut-off body (2, 2', 2") has an operative surface A2 to which the fluid in the housing (4) is applied in such a way that it exerts a force in the direction of the spring force of the spring element (10) on the shut-off body (2, 2', 2"), wherein the surfaces A1 and A2 are so selected that the forces applied thereto substantially compensate each other.

2. A pressure retention valve (1, 1") according to claim 1 **characterised in that** the guide portion (18, 30') has at least one passage (21) which extends substantially parallel to the inlet passage (13) of the housing (4) and through which the fluid to be conveyed flows in operation of the valve.

3. A pressure retention valve (1, 1"') according to claim 1 or claim 2 **characterised in that** the guide portion (18, 30') has at least one passage (33') extending in a direction perpendicularly to the direction of the guide bush (19) in the inlet passage (13).

4. A pressure retention valve (1, 1"') according to one of claims 1 to 3 **characterised in that** the guide portion (18) has a plurality of guide vanes (20) extending substantially in the radial direction and spaced from each other in the peripheral direction so that in the opened condition of the valve fluid can flow out of the inlet passage (13) through the guide portion (18) of the shut-off body and through an intermediate space between the first and second sealing surfaces (16, 17) into the outlet passage (14).

5. A pressure retention valve (1, 1"') according to one of claims 1 to 4 **characterised in that** the guide portion (30') has a hollow-cylindrical portion which at its end towards the valve seat has at least one orifice (33') so that in the opened condition of the valve fluid can flow out of the inlet passage (13) through the hollow-cylindrical portion of the shut-off body (2') through the orifice (33') in the hollow-cylindrical portion and further through an intermediate space between the first and second sealing surfaces (16, 17) into the outlet passage (14).

6. A pressure retention valve (1, 1") according to one of claims 1 to 5 **characterised in that** the guide bush (19) forms a hollow cylinder with an inside diameter and the guide portion (18, 30') of the shut-off body (2, 2', 2") has an outside diameter, wherein the inside diameter and the outside diameter differ from each other by 0.5 mm to 2 mm and preferably from 0.8 mm to 1.5 mm.

7. A pressure retention valve (1, 1") according to one of claims 1 to 6 **characterised in that** the guide portion (18, 30') of the shut-off body (2, 2', 2"), that extends into the inlet passage (13), is of an overall length which is such that when the shut-off body (2, 2', 2") is in a position of completely opening the valve (1, 1") the guide portion (18, 30') is still disposed at least over a length in the guide bush (19), that is at least half and preferably two thirds of the overall length of the guide portion (18, 30').

8. A pressure retention valve (1, 1"') according to one of claims 1 to 7 **characterised in that** the sealing surface of the shut-off body (2") is formed by at least one sealing ridge (35", 36", 37") extending in the peripheral direction.

9. A pressure retention valve (1, 1"') according to claim 8 **characterised in that** the shut-off body (2") is made from a softer plastic material than the valve seat (15).

## Revendications

1. Soupape de maintien de pression (1, 1"'), avec un carter (4) qui présente un conduit d'entrée (13) et un conduit de sortie (14), le conduit d'entrée (13) et le conduit de sortie (14) pouvant être raccordés l'un à l'autre,
avec une membrane séparatrice (7) qui divise le carter (4) en deux tronçons, un premier tronçon (8) transportant un fluide pendant le fonctionnement de la soupape, et un deuxième tronçon (9) exempt de fluide,
avec un siège de soupape (15) disposé dans le tronçon (8) transportant un fluide du carter (4), avec une surface d'étanchéité (16), le siège de soupape (15) définissant une extrémité du conduit d'entrée (13),
avec un corps d'arrêt (2, 2') disposé de façon mobile dans le tronçon (8) transportant un fluide du carter (4), avec une surface d'étanchéité (17) et
avec un élément de ressort (10) avec une force de ressort qui est disposé dans le tronçon (9) exempt de fluide de la soupape de maintien de pression (1),
l'élément de ressort (10) étant disposé de telle sorte que sa force de ressort pré-tend la surface d'étanchéité (17) du corps d'arrêt en direction de la surface d'étanchéité (16) du siège de soupape (15) de telle sorte que, dans une position du corps d'arrêt (2, 2', 2") fermant la soupape de maintien de pression (1), les surfaces d'étanchéité (16, 17) sont en engrènement l'une avec l'autre et le corps d'arrêt opère une séparation entre le conduit d'entrée (13) et le conduit de sortie (14),
et le conduit d'entrée (13) étant disposé de telle sorte que, pendant le fonctionnement de la soupape (1), un fluide affluant à travers le conduit d'entrée (13) est présent contre le corps d'arrêt (2, 2', 2") de telle sorte que le fluide exerce une force sur le corps d'arrêt (2, 2') qui s'oppose à la force de ressort de l'élément de ressort (10),
le corps d'arrêt (2, 2', 2") présentant un tronçon de guidage (18, 30') qui s'étend à l'intérieur du conduit d'entrée (13), le conduit d'entrée (13) étant constitué par tronçons de telle sorte qu'il forme une douille de guidage (19) dans laquelle le tronçon de guidage (18, 30') du corps d'arrêt (2, 2', 2") est logé de façon guidée, et
la douille de guidage (19) présentant une forme essentiellement cylindrique creuse avec une paroi intérieure de cylindre qui limite le volume du conduit d'entrée (13) et réalise le guidage pour le tronçon de guidage (18),
la membrane séparatrice (7) présentant une face active A1 contre laquelle est présent un fluide situé dans le carter (4) de telle sorte qu'il exerce une force opposée à la force de ressort de l'élément de ressort (10),
**caractérisée en ce que**
le corps d'arrêt (2, 2', 2") présente une face active A2 contre laquelle est présent un fluide situé dans le carter (4) de telle sorte qu'il exerce une force en direction de la force de ressort de l'élément de ressort (10) sur le corps d'arrêt (2, 2', 2"), les faces A1 et A2 étant choisies de telle sorte que les forces présentes sur elles se compensent essentiellement.

2. Soupape de maintien de pression (1, 1") selon la revendication 1, **caractérisée en ce que** le tronçon de guidage (18, 30') présente au moins un conduit (21) qui s'étend essentiellement parallèlement au conduit d'entrée (13) du carter (4) et à travers lequel s'écoule le fluide à transporter pendant le fonctionnement de la soupape.

3. Soupape de maintien de pression (1, 1") selon la revendication 1 ou 2, **caractérisée en ce que** le tronçon de guidage (18, 30') présente au moins un conduit (33') qui s'étend dans une direction perpendiculairement à la direction de la douille de guidage (19) dans le conduit d'entrée (13).

4. Soupape de maintien de pression (1, 1") selon l'une des revendications 1 à 3, **caractérisée en ce que** le tronçon de guidage (18) présente une pluralité d'ailettes de guidage (20) s'étendant essentiellement dans la direction radiale et espacées les unes des autres dans la direction circonférentielle de telle sorte que, dans l'état ouvert de la soupape, du fluide peut s'écouler à partir du conduit d'entrée (13) en traversant le tronçon de guidage (18) du corps d'arrêt et entrer dans le conduit de sortie (14) à travers un espace intermédiaire entre les première et deuxième surfaces d'étanchéité (16, 17).

5. Soupape de maintien de pression (1, 1") selon l'une des revendications 1 à 4, **caractérisée en ce que** le tronçon de guidage (30') présente un tronçon cylindrique creux qui présente à son extrémité côté siège de soupape au moins une perforation (33') de telle sorte que, dans l'état ouvert de la soupape, du fluide peut quitter le conduit d'entrée (13) en traversant le tronçon cylindrique creux du corps d'arrêt (2'), traverser la perforation (33') dans le tronçon cylindrique creux et continuer pour couler dans le conduit de sortie (14) à travers un espace intermédiaire entre les première et deuxième surfaces d'étanchéité (16, 17).

6. Soupape de maintien de pression (1, 1") selon l'une des revendications 1 à 5, **caractérisée en ce que** la douille de guidage (19) forme un cylindre creux avec un diamètre intérieur, et le tronçon de guidage (18, 30') du corps d'arrêt (2, 2', 2") présente un diamètre extérieur, le diamètre intérieur et le diamètre extérieur différant l'un de l'autre de 0,5 mm à 2 mm et de préférence de 0,8 mm à 1,5 mm.

7. Soupape de maintien de pression (1, 1") selon l'une des revendications 1 à 6, **caractérisée en ce que** le tronçon de guidage (18, 30') du corps d'arrêt (2, 2', 2") s'étendant dans le conduit d'entrée (13) présente une longueur totale qui est dimensionnée de telle sorte que le tronçon de guidage (18, 30'), quand le corps d'arrêt (2, 2', 2") est dans une position qui ouvre complètement la soupape (1, 1"), se trouve au moins dans la douille de guidage (19) encore sur une longueur qui est au moins égale à la moitié, et de préférence aux deux tiers, de la longueur totale du tronçon de guidage (18, 30').

8. Soupape de maintien de pression (1, 1") selon l'une des revendications 1 à 7, **caractérisée en ce que** la surface d'étanchéité du corps d'arrêt (2") est formée d'au moins un bourrelet d'étanchéité (35", 36", 37") placé dans la direction circonférentielle.

9. Soupape de maintien de pression (1, 1") selon la revendication 8, **caractérisée en ce que** le corps d'arrêt (2") est fabriqué avec un matériau synthétique plus tendre que le siège de soupape (15).
